# EUROPEAN PATENT APPLICATION

(11) **EP 4 521 263 A1**
(43) Date of publication of application: **12.03.2025**
(21) Application number: 23869749.4
(22) Date of filing: 19.06.2023
(51) Int. Cl.: G06F 16/29, G06F 16/909

(54) **VIDEO MONITORING DATA PROCESSING METHOD, APPARATUS AND DEVICE, AND READABLE STORAGE MEDIUM**

(30) Priority: 30.09.2022 CN 202211209269
(71) Applicant: Hangzhou Hikvision System Technology Co., Ltd., Hangzhou, Zhejiang 310051 (CN)
(72) Inventor: PAN, Jinwei, Hangzhou, Zhejiang 310051 (CN); YUAN, Chenxue, Hangzhou, Zhejiang 310051 (CN)
(74) Representative: Dai, Simin
(86) International application number: PCT/CN2023/101121
(87) International publication number: WO 2024/066501

(57) **Abstract**

Disclosed in the present invention are a video monitoring data processing method, apparatus and device, and a computer-readable storage medium. The method comprises: determining position information of the perimeter of a security protection region, wherein the perimeter comprises a boundary line or a boundary region of an actual geographic region corresponding to the security protection region (S10); determining target video monitoring devices, monitoring ranges of which overlap with the perimeter (S20); according to the position information of the perimeter and position information of the monitoring ranges of the target video monitoring devices, determining overlapping regions between the perimeter and the monitoring ranges of the target video monitoring devices (S30); and determining an enclosure result of the perimeter by using the overlapping regions and the position information of the perimeter, wherein the enclosure result is used for representing the extent to which the perimeter is covered by the monitoring ranges of the video monitoring devices (S40). By means of providing a solution for generating an enclosure result of a perimeter, the present invention makes it convenient for a user to deploy video monitoring devices.

## Description

### CROSS-REFERENCE TO RELATED APPLICATIONS

The present application claims priority to Chinese patent application No. 202211209269.1, filed on September 30, 2022, which is hereby incorporated by reference in its entirety.

### TECHNICAL FIELD

The present disclosure relates to the technical field of video security and protection, and in particular, to a video monitoring data processing method, apparatus and device, and a computer-readable storage medium.

### BACKGROUND

With the development of video monitoring technologies, video monitoring devices need to be deployed for security and protection in more and more application scenarios. In some application scenarios, to ensure the security effect, usually a certain security region will be defined, and some video monitoring devices are deployed within or around the security region for security and protection. At present, during deployment of a video monitoring device, a technician is often required to perform on-site investigation to determine whether the video monitoring device can be properly deployed, or determine proper places for the video monitoring device to be deployed, which is a low-efficient manner that may cause unnecessary waste of video monitoring device resources.

### SUMMARY

A main objective of the present disclosure is to provide a video monitoring data processing method, apparatus and device, and a computer-readable storage medium, to facilitate deployment of video monitoring devices by a user by generating an enclosure result of a perimeter.

To achieve the above objective, the present disclosure provides a video monitoring data processing method, including:
determining location information of a perimeter of a security region, where the perimeter includes a boundary line or a boundary region of an actual geographic region corresponding to the security region;
determining target video monitoring devices each with a monitoring range overlapping with the perimeter;
determining overlapping regions between the perimeter and monitoring ranges of the target video monitoring devices according to the location information of the perimeter and location information of the monitoring ranges of the target video monitoring devices; and
determining an enclosure result of the perimeter according to the overlapping regions and the location information of the perimeter, where the enclosure result represents a degree of coverage on the perimeter by monitoring ranges of video monitoring devices.

Optionally, determining the location information of the perimeter of the security region includes:
acquiring region location information of the security region planned on an electronic map;
acquiring road network data, and determining, according to the road network data and the region location information, a target road network region overlapping with the security region from road network regions corresponding to road facilities;
modifying the security region according to the target road network region to obtain a modified actual geographic region corresponding to the modified security region, where modifying includes at least one of: removing the target road network region from the security region, merging the security region with the target road network region, or shrinking the security region into the target road network region; and
determining the location information of the perimeter according to location information of the modified actual geographic region.

Optionally, determining the location information of the perimeter of the security region includes:
widening the boundary line to a boundary ring with a preset width according to location information of the boundary line of the actual geographic region corresponding to the security region, and acquiring location information of the boundary ring; and
determining the location information of the boundary ring as the location information of the perimeter.

Optionally, determining the target video monitoring devices each with the monitoring range overlapping with the perimeter includes:
acquiring deployment data of a plurality of video monitoring devices;
selecting video monitoring devices each having a shortest distance to the perimeter being less than a preset threshold from the plurality of video monitoring devices according to installation location information in the deployment data;
filtering out video monitoring devices deployed in a building range from the selected video monitoring devices according to the installation location information in the deployment data; and
selecting the target video monitoring devices each with the monitoring range overlapping with the perimeter from remaining video monitoring devices after filtering according to the location information of the perimeter.

Optionally, determining the enclosure result of the perimeter according to the overlapping regions and the location information of the perimeter includes:
calculating a sum of areas of the overlapping regions;
calculating a total area of the perimeter; and
calculating an enclosure degree according to the sum of areas and the total area, and determining the enclosure degree as the enclosure result of the perimeter.

Optionally, determining the enclosure result of the perimeter according to the overlapping regions and the location information of the perimeter includes: calculating a sum of lengths of the overlapping regions; calculating a total length of the perimeter; and calculating an enclosure degree according to the sum of lengths and the total length, and determining the enclosure degree as the enclosure result of the perimeter.

Optionally, the method further includes:
displaying, on an electronic map with a first display effect, a region of the perimeter not covered by the monitoring ranges of the target video monitoring devices; and
displaying the overlapping regions of the perimeter on the electronic map with a second display effect, and displaying the monitoring ranges of the target video monitoring devices with a third display effect.

To achieve the above objective, the present disclosure provides a video monitoring data processing apparatus, including:
a first determining module, configured to determine location information of a perimeter of a security region, where the perimeter includes a boundary line or a boundary region of an actual geographic region corresponding to the security region;
a second determining module, configured to determine target video monitoring devices each with a monitoring range overlapping with the perimeter;
a third determining module, configured to determine overlapping regions between the perimeter and monitoring ranges of the target video monitoring devices according to the location information of the perimeter and location information of the monitoring ranges of the target video monitoring devices; and
a fourth determining module, configured to determine an enclosure result of the perimeter according to the overlapping regions and the location information of the perimeter, where the enclosure result represents a degree of coverage on the perimeter by monitoring ranges of video monitoring devices.

Optionally, the first determining module includes:
a first acquiring unit, configured to acquire region location information of the security region planned on an electronic map;
a second acquiring unit, configured to acquire road network data, and determining, according to the road network data and the region location information, a target road network region overlapping with the security region from road network regions corresponding to road facilities;
a modifying unit, configured to modify the security region according to the target road network region to obtain a modified actual geographic region corresponding to the modified security region, where modifying includes at least one of: removing the target road network region from the security region, merging the security region with the target road network region, or shrinking the security region into the target road network region; and
a first determining unit, configured to determine the location information of the perimeter according to location information of the modified actual geographic region.

Optionally, the first determining module includes:
a widening unit, configured to widen the boundary line to a boundary ring with a preset width according to location information of the boundary line of the actual geographic region corresponding to the security region, and acquire location information of the boundary ring; and
a second determining unit, configured to determine the location information of the boundary ring as the location information of the perimeter.

Optionally, the second determining module includes:
a third acquiring unit, configured to acquire deployment data of a plurality of video monitoring devices;
a selecting unit, configured to select video monitoring devices each having a shortest distance to the perimeter being less than a preset threshold from the plurality of video monitoring devices according to installation location information in the deployment data;
a filtering unit, configured to filter out video monitoring devices deployed in a building range from the selected video monitoring devices according to the installation location information in the deployment data; and
an electing unit, configured to select the target video monitoring devices each with the monitoring range overlapping with the perimeter from remaining video monitoring devices after filtering according to the location information of the perimeter.

Optionally, the fourth determining module includes:
a first calculating unit, configured to calculate a sum of areas or a sum of lengths of the overlapping regions;
a second calculating unit, configured to calculate a total area or a total length of the perimeter;
a third calculating unit, configured to calculate an enclosure degree according to the sum of areas and the total area or according to the sum of lengths and the total length, and determine the enclosure degree as the enclosure result of the perimeter.

Optionally, the apparatus further includes:
a first displaying module, configured to display, on an electronic map with a first display effect, a region of the perimeter not covered by the monitoring ranges of the target video monitoring devices; and
a second displaying module, configured to display the overlapping regions of the perimeter on the electronic map with a second display effect, and display the monitoring ranges of the target video monitoring devices with a third display effect.

To achieve the above objective, the present disclosure further provides a video monitoring data processing device, including: a memory, a processor, and a video monitoring data processing program stored in the memory and executable on the processor, where when the video monitoring data processing program is executed by the processor, steps of the above video monitoring data processing method.

In addition, to achieve the above objective, the present disclosure further provides a computer-readable storage medium, storing a video monitoring data processing program, where when the video monitoring data processing program is executed by a processor, steps of the above video monitoring data processing method is implemented.

In the embodiments of the present disclosure, the location information of the perimeter of the security region is determined, where the perimeter includes a boundary line or a boundary region of an actual geographic region corresponding to the security region; target video monitoring devices each with the monitoring range overlapping with the perimeter are determined; overlapping regions between the perimeter and monitoring ranges of the target video monitoring devices are determined according to the location information of the perimeter and location information of the monitoring ranges of the target video monitoring devices; and an enclosure result of the perimeter is determined according to the overlapping regions and the location information of the perimeter, where the enclosure result represents a degree of coverage on the perimeter by monitoring ranges of video monitoring devices. Compared with on-site investigation by a user in related arts to determine whether video monitoring devices are properly installed on boundaries of the security region, in the embodiments of the present disclosure, a manner of generating an enclosure result of a perimeter is provided, which brought convenience for the user to learn whether the video monitoring devices are properly installed on boundaries of the security region, and facilitate the user to make a quick and reasonable decision on video monitoring device deployment scheme based on the generated enclosure result.

### BRIEF DESCRIPTION OF DRAWINGS

FIG. 1 is a schematic flowchart of an embodiment of a video monitoring data processing method according to the present disclosure.
FIG. 2 is a schematic diagram of a scene in which a security region overlaps with a road network region corresponding to a road according to an embodiment of the present disclosure.
FIG. 3 is a schematic diagram of a scene in which a security region overlaps with a road network region corresponding to a community according to an embodiment of the present disclosure.
FIG. 4 is a schematic diagram of a boundary ring according to an embodiment of the present disclosure.
FIG. 5 is a schematic diagram of a monitoring range according to an embodiment of the present disclosure.
FIG. 6 is a schematic diagram of a display effect of a perimeter and a monitoring range according to an embodiment of the present disclosure.
FIG. 7 is a schematic structural diagram of a hardware operating environment according to an embodiment of the present disclosure.

The implementation, functional features and advantages of the present disclosure will be further described with reference to the accompanying drawings.

### DETAILED DESCRIPTION

It should be understood that the specific embodiments described herein are merely used to explain the present disclosure, and are not intended to limit the present disclosure.

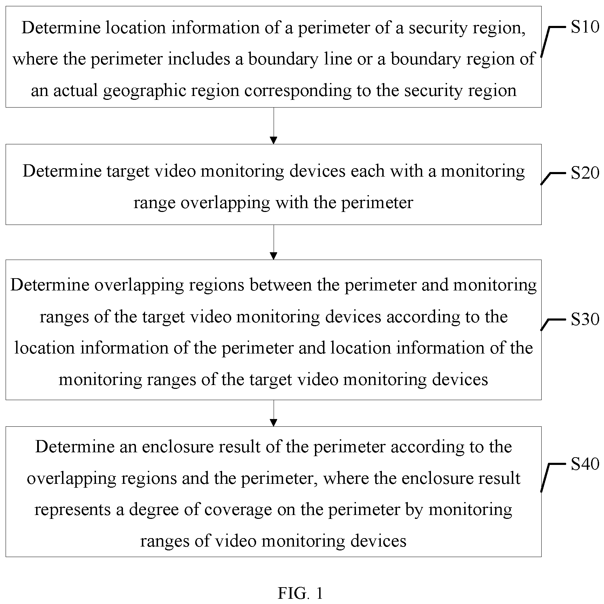

Referring to FIG. 1, FIG. 1 is a schematic flowchart of an embodiment of a video monitoring data processing method according to the present disclosure.

Embodiments of the present disclosure provide an embodiment of a video monitoring data processing method, and it should be noted that although a logical order is shown in the flowchart, in some cases, the steps shown or described may be performed in a different order. In this embodiment, an executing body of the video monitoring data processing method may be a device such as a smart phone, a personal computer, or a server, which is not limited in this embodiment. In this embodiment, for ease of description, the executing body is not described. In this embodiment, the video monitoring data processing method includes following steps.

Step S10, determining location information of a perimeter of a security region, where the perimeter includes a boundary line or a boundary region of an actual geographic region corresponding to the security region.

The security region is a region planned by a user and requiring security protection, and the user can deploy video monitoring devices on a perimeter of the security region and perform security monitoring through the video monitoring devices to achieve a purpose of security protection. The perimeter of the security region may be a boundary line or a boundary region of an actual geographic region corresponding to the security region, or the perimeter may be a combination of the boundary line and the boundary region. The boundary region may be an annular region (also referred to as a boundary ring), that is, a boundary line with a certain width; the width of the entire boundary ring may be consistent or inconsistent, which is not limited in the embodiment. There are many ways to acquire the location information of the perimeter, which is not limited in the embodiment.

It should be noted that, the boundary ring herein may include rings of various shapes, such as a circular ring, an elliptical ring, a square ring, a polygonal ring, an irregularly shaped ring, and the like. It can be understood that the present disclosure does not limit a shape of the security region, and therefore does not limit a shape of the boundary ring.

For example, in an embodiment, the location information of the perimeter planned by a user on an electronic map may be acquired; it should be noted that even if the perimeter planned on the map is not proper, for example, the perimeter crosses a building, determination of an enclosure result of the perimeter is not affected to some extent. The enclosure result is a result that can be used to represent a degree of coverage on the perimeter by monitoring ranges of video monitoring devices.

For another example, in another implementation, region location information of the security region planned on the electronic map may be acquired, and the location information of the perimeter is determined according to the region location information. The region location information of the security region refers to information that can represent a location of the security region in an electronic map coordinate system or a longitude and latitude coordinate system, and may be specifically represented by using a set of coordinate points or a set of line segments, which is not limited in the embodiment. A manner of acquiring the region location information of the security region is not limited in this embodiment, for example, the region location information of the security region may be acquired from another device, or for another example, the region location information of the security region planned by the user through interaction with outside devices on the displayed electronic map may be acquired. In an example, a user drags a mouse on the displayed electronic map to draw a boundary line, a region enclosed by the boundary line is the security region, and the region location information of the security region is acquired by recording location information of the boundary line in an electronic map coordinate system or a longitude and latitude coordinate system. The security region is in connection to the map, and the actual geographic region corresponding to the security region is in connection to the actual geographic space. In a specific implementation, the actual geographic region corresponding to the security region may be completely consistent with the security region, that is, when the region location information of the security region is represented by coordinate points or line segments in the electronic map coordinate system, after the region location information of the security region is converted to the longitude and latitude coordinate system, the region location information of the security region may be used as the location information of the actual geographic region corresponding to the security region, and when the region location information of the security region is directly represented by coordinate points or line segments in the longitude and latitude coordinate system, the region location information of the security region may be directly used as the location information of the actual geographic region corresponding to the security region; or the security region may be modified to a certain extent according to requirements of a specific application scenario, and the actual geographic region corresponding to the security region is determined based on the modified region.

A manner of determining the location information of the perimeter according to the region location information of the security region is not limited in the embodiment. For example, the perimeter may be defined as a boundary line of the actual geographic region according to requirements of a specific application scenario, and the region location information of the security region may be location information of the boundary line of the security region in the longitude and latitude coordinate system. Based on this, in an implementation, the region location information of the security region may be directly taken as the location information of the perimeter. In another implementation, the boundary line of the security region may be first widened to a boundary ring with a preset width, and the boundary ring is taken as the boundary region, that is, location information of the boundary ring is taken as the location information of the boundary region.

Step S20, determining target video monitoring devices each with a monitoring range overlapping with the perimeter.

The video monitoring device may include a video monitoring device that has been actually deployed and installed, or may include a video monitoring device that is planned to be deployed and installed. The target video monitoring devices are video monitoring devices with monitoring ranges overlapping with the perimeter. In this embodiment, a manner of determining the target video monitoring devices is not limited. For example, in an implementation, deployment data of the video monitoring devices may be acquired, and target video monitoring devices each having a monitoring range overlapping with the perimeter is selected from the video monitoring devices according to the deployment data and the location information of the perimeter. The deployment data of the video monitoring devices may include location information of monitoring ranges of the video monitoring devices, or may include other information that can be used to calculate the location information of the monitoring ranges of the video monitoring devices, for example, installation location information of the video monitoring devices. In a specific implementation, when the deployment data includes the location information of the monitoring ranges of the video monitoring devices, whether a monitoring range of a video monitoring device overlaps with the perimeter may be directly determined according to the location information of the monitoring ranges of the video monitoring devices and the location information of the perimeter; and when the deployment data includes other information that can be used to calculate the location information of the monitoring ranges of the video monitoring devices, the location information of the monitoring ranges of the video monitoring devices may be first calculated according to the deployment data, and then whether a monitoring range of a video monitoring device overlaps with the perimeter is determined according to the location information of the monitoring ranges and the location information of the perimeter.

It can be understood that, the monitoring range is a region, the perimeter is a boundary line and/or a boundary region, whether the monitoring range overlaps with the boundary line and/or the boundary region may be calculated according to a data calculating manner according to the location information of the monitoring range and the boundary line and/or the boundary region, and the calculating manner is not described in this embodiment.

Step S30, determining overlapping regions between the perimeter and monitoring ranges of the target video monitoring devices according to the location information of the perimeter and location information of the monitoring ranges of the target video monitoring devices.

There are many ways to determine the overlapping regions between the perimeter and the monitoring range of each target video monitoring device, which is not limited in this embodiment. For example, in an implementation, the location information of the perimeter and the location information of the monitoring ranges of the target video monitoring devices may be represented by using sets of coordinate points, and an intersection of the two sets of coordinate points is calculated as the location information of the overlapping regions.

Step S40, determining an enclosure result of the perimeter according to the overlapping regions and the perimeter, where the enclosure result represents a degree of coverage on the perimeter by monitoring ranges of video monitoring devices.

The enclosure result is a result that can be used to represent a degree of coverage on the perimeter by monitoring ranges of video monitoring devices, in this embodiment, a specific data form of the enclosure result is not limited. In a specific application scenario, the enclosure result meeting a user requirement may be generated. For example, in an implementation, the enclosure result may be an enclosure degree, a larger enclosure degree indicates a larger degree of coverage on the perimeter by the monitoring ranges of the video monitoring devices, and a smaller enclosure degree indicates a smaller degree of coverage on the perimeter by the monitoring ranges of the video monitoring devices. For another example, in another implementation, the enclosure result may be the displayed perimeter, overlapping regions, and monitoring ranges of the target video monitoring devices in the electronic map, and it may be understood that the user can more intuitively learn, based on the displayed content, the degree of coverage on the perimeter by the monitoring ranges of the video monitoring devices. For another example, in another implementation, the enclosure result may include both the enclosure degree and the displayed perimeter, overlapping regions, and monitoring ranges of the target video monitoring devices in the electronic map.

In the embodiment, the location information of the perimeter of the security region is determined, where the perimeter includes a boundary line or a boundary region of an actual geographic region corresponding to the security region; target video monitoring devices each with the monitoring range overlapping with the perimeter are determined; overlapping regions between the perimeter and monitoring ranges of the target video monitoring devices are determined according to the location information of the perimeter and location information of the monitoring ranges of the target video monitoring devices; and an enclosure result of the perimeter is determined according to the overlapping regions and the perimeter, where the enclosure result represents a degree of coverage on the perimeter by monitoring ranges of video monitoring devices. Compared with on-site investigation by a user in related arts to determine whether video monitoring devices are properly installed on boundaries of the security region, in the embodiments, a manner of generating an enclosure result of a perimeter is provided, which brought convenience for the user to learn whether the video monitoring devices are properly installed on boundaries of the security region, and facilitate the user to make a quick and reasonable decision on video monitoring device deployment scheme based on the generated enclosure result.

Further, based on the above embodiment, another embodiment of the video monitoring data processing method of the present disclosure is provided, and in this embodiment, step S10 includes steps S101 to S104.

Step S101, acquiring region location information of the security region planned on an electronic map.

For a specific manner of acquiring the region location information of the security region, refer to the corresponding description at step S10, and details will not be repeated herein.

Step S102, acquiring road network data, and determining, according to the road network data and the region location information, a target road network region overlapping with the security region from road network regions corresponding to road facilities.

In a specific application scenario, when a user plans a security region on an electronic map, an actual road network condition may not be considered, so that the planned security region is inconsistent with a region that is convenient/allowed to be planned in an actual geographic space; or the user only simply plans an approximate security region in the electronic map which needs to be modified according to road network data depending on a device.

Based on this, in this embodiment, in the process of determining the location information of the perimeter according to the region location information of the security region, the road network data may be first acquired. The road network data may include location information of a region (hereinafter referred to as a road network region) corresponding to a road network facility such as a road, a community, and a school. A manner of acquiring the road network data is not limited in this embodiment, for example, the road network data may be acquired from a database of an electronic map. A road network region corresponding to a road network facility refers to a geographic region occupied by the road network facility in an actual geographic space, and the road network region corresponding to a road network facility may be as a whole, or may be divided into a plurality of pieces, that is, one road network facility may correspond to one or more road network regions, for example, a long road network facility such as a road may be divided into segments, for example, one segment per 100 meters, to obtain road network regions corresponding to the road.

According to the road network data and the region location information of the security region, road network regions overlapping with the security region may be determined from the road network regions corresponding to the road network facilities (hereinafter referred to as a target road network region to distinguish). It may be understood that, according to the location information of the road network regions and the region location information of the security region, whether the road network regions and the security region overlap may be calculated by using a mathematical calculating manner.

Step S103, modifying the security region according to the target road network region to obtain a modified actual geographic region corresponding to the modified security region, where modifying includes at least one of: removing the target road network region from the security region, merging the security region with the target road network region, or shrinking the security region into the target road network region.

Modifying the security region according to the target road network region specifically refers to modifying the region location information of the security region according to the location information of the target road network region. The modified location information (after converted to the longitude and latitude coordinate system) can be taken as the location information of the actual geographic region.

Modifying the security region may include at least one of: removing the target road network region from the security region (hereinafter referred to as removing operation), merging the security region with the target road network region (hereinafter referred to as merging operation), or shrinking the security region into the target road network region (hereinafter referred to as shrinking operation). In a specific implementation, whether to perform the removing operation, the merging operation, or the shrinking operation may be specifically set according to a requirement of a specific application scenario. Alternatively, a trigger condition for performing the removing operation, the merging operation, or the shrinking operation may be set according to a requirement of a specific application scenario, the removing operation is performed when a trigger condition for the removing operation is met, the merging operation is performed when a trigger condition for the merging operation is met, and the shrinking operation is performed when a trigger condition for the shrinking operation is met. For example, when the target road network region is completely surrounded by the security region, when a ratio of a region of the target road network region to a region of the security region is greater than a certain threshold, the shrinking operation is performed. When the security region is completely surrounded by the target road network region, and when the ratio of a region of the security region to a region of the target road network region is greater than a certain threshold, the merging operation is performed. When there is an intersection between the target road network region and the security region, and when an overlapping region between the target road network region and the security region is less than a certain threshold, the removing operation is performed, and when the overlapping region between the target road network region and the security region is greater than or equal to the threshold, the merging operation is performed. In some embodiments, it may also be set that when a certain condition is met, none of the three operations is performed, that is, the security region is kept unchanged. In some implementations, when there are more than one target road network regions, condition determining may be performed for each target road network region, and a corresponding operation is performed according to a satisfied condition, that is, operations performed for different target road network regions may be different.

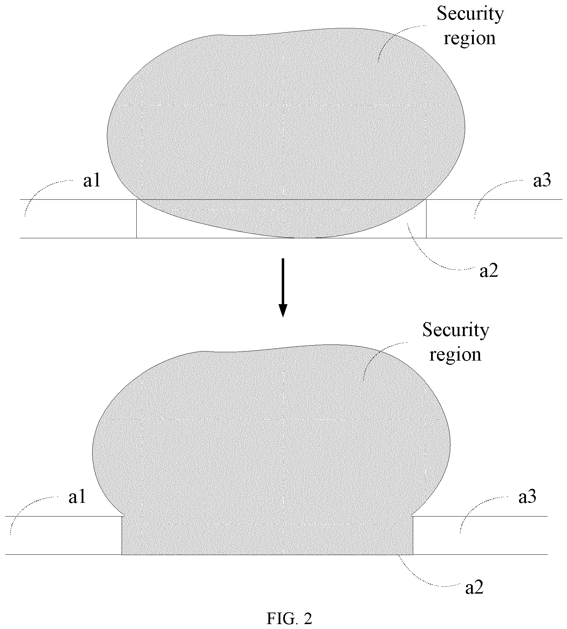

For example, as shown in FIG. 2, a road network region corresponding to a certain road includes three segments *a1, a2,* and *a3,* where the road network region *a2* overlaps with a security region (a shadow region shown in an upper figure in FIG. 2), and the road network region *a2* is selected as a target road network region; when a merging operation is performed according to a requirement of a specific application scenario, the security region and the road network region *a2* are merged, and the merged region (a shadow region shown in a lower figure in FIG. 2) is used as an actual geographic region corresponding to the security region, that is, a boundary of the original security region crosses the road, and this setting is obviously unreasonable in the actual geographic space, so that the unreasonable boundary of the segment is modified to the boundary of the road network region *a2* corresponding to the road *A,* so that an enclosure result obtained through subsequent calculation is more reasonable and accurate.

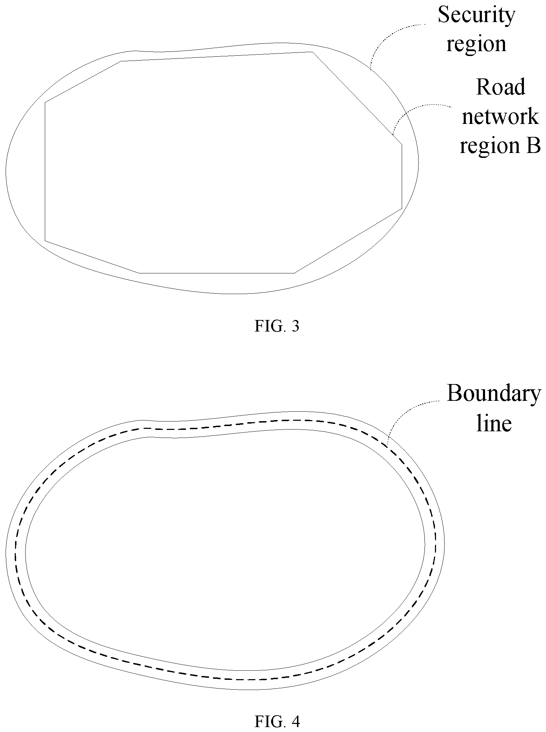

For example, as shown in FIG. 3, the road network region corresponding to the community *B* is considered as a whole, that is, the road network region *B* in the figure, the user intends to use the community *B* as a security region, and simply plans an outline of the community *B* (that is, the outline of the security region in the figure) on the electronic map, but the edge may include some regions exceeding the road network region *B.* In this case, the community *B* is located within the security region, the community *B* is selected as the target road network region, and because a ratio of a region of the community *B* to a region of the security region is greater than a certain threshold, the shrinking operation is performed to determine the community *B* as the actual geographic region corresponding to the security region.

Step S104, determining the location information of the perimeter according to location information of the modified actual geographic region.

After the actual geographic region is determined, that is, after the location information of the actual geographic region is determined, the location information of the perimeter may be determined according to the location information of the actual geographic region. For example, in an implementation, when the location information of the actual geographic region is the location information of the boundary line of the region, and the perimeter refers to the boundary line of the actual geographic region, the location information of the actual geographic region may be directly used as the location information of the perimeter.

For another example, in another implementation, when the location information of the actual geographic region is location information of a boundary line of the actual geographic region, and the perimeter is a boundary region of the actual geographic region corresponding to the security region, step S10 includes S105 and S106.

Step S105, widening the boundary line to a boundary ring with a preset width according to location information of the boundary line of the actual geographic region corresponding to the security region, and acquiring location information of the boundary ring.

The boundary line is widened into a boundary ring with a preset width according to the location information of the boundary line. The preset width may be preset as required, which is not limited in this embodiment. Widening the boundary line may be widening towards the inside of the region, or widening towards the outside of the region, or widening towards both the outside and inside of the region. As shown in FIG. 4, a boundary ring of a preset width obtained by widening a boundary line of an actual geographic region toward both the inside and outside of the region is shown as an example, a frame line in between shown in the figure is a boundary line, and a ring formed by frame lines on both sides of the boundary line is a boundary ring.

It may be understood that the location information of the boundary ring may be calculated by using a data calculating manner according to the location information of the boundary line, which is not described herein.

Step S106, determining the location information of the boundary ring as the location information of the perimeter.

After the location information of the boundary ring is obtained, the location information of the boundary ring may be used as the location information of the perimeter.

Further, based on the above embodiments, another embodiment of the video monitoring data processing method of the present disclosure is provided, and in this embodiment, step S20 includes steps S201 to S204.

Step S201, acquiring deployment data of a plurality of video monitoring devices.

A manner of acquiring the deployment data of the video monitoring devices is not limited in this embodiment, for example, the deployment data of the video monitoring devices may be directly obtained from a database of another device, or an input interface of the deployment data of the video monitoring devices may be provided, and the user can input the deployment data of the video monitoring devices based on the input interface.

Step S202, selecting video monitoring devices each having a shortest distance to the perimeter being less than a preset threshold from the plurality of video monitoring devices according to installation location information in the deployment data.

In this implementation, in order to improve efficiency of selecting the target video monitoring devices, video monitoring devices close to the perimeter may be first selected from the video monitoring devices.

Specifically, shortest distances between the video monitoring devices and the perimeter may be first calculated according to the installation location information in the deployment data of the video monitoring devices. The installation location information may include coordinate values of installation locations of the video monitoring devices in the longitude and latitude coordinate system. There are many ways to calculate the shortest distances between the video monitoring devices and the perimeter, which is not limited in this embodiment. For example, when the perimeter is represented by a set of coordinate points, the distance from the installation location of the video monitoring device to the coordinate points in the set of coordinate points may be calculated, and the shortest distance is selected as the shortest distance between the video monitoring device and the perimeter.

A threshold may be preset as required (i.e., preset threshold), and when the shortest distance between the video monitoring device and the perimeter is greater than or equal to the preset threshold, it is considered that the monitoring range of the video monitoring device certainly will not overlap the perimeter. Video monitoring devices each having a shortest distance to the perimeter being less than a preset threshold are selected from the plurality of video monitoring devices.

Optionally, for each selected video monitoring device, it may be further determined whether a relative direction of the perimeter relative to the video monitoring device is opposite to an orientation of the video monitoring device, and if the relative direction of the perimeter relative to the video monitoring device is opposite to the orientation of the video monitoring device, the video monitoring device is filtered out; and if the relative direction of the perimeter relative to the video monitoring device is not opposite to the orientation of the video monitoring device, step S203 is proceeded. In this embodiment, there are many ways to determine whether the relative direction is opposite to the orientation of the video monitoring device, for example, when the video monitoring device is within a region enclosed by the perimeter and an orientation of the video monitoring device is facing away from the perimeter, or when the video monitoring device is outside the region enclosed by the perimeter and the orientation of the video monitoring device is facing away from the perimeter, it is determined that the relative direction of the perimeter relative to the video monitoring device is opposite to the orientation of the video monitoring device.

Step S203, filtering out video monitoring devices deployed in a building range from the selected video monitoring devices according to the installation location information in the deployment data.

In this embodiment, considering that some video monitoring devices arranged within a building range cannot monitor external environment due to sheltering of the building, in order to improve accuracy of generating the enclosure result of the perimeter, the video monitoring devices arranged within the building range may be filtered out from the video monitoring devices selected in step S202 according to the installation location information in the deployment data.

In an implementation, the installation location information may include a coordinate value of an installation location of the video monitoring device in the longitude and latitude coordinate system, and location information of a building range may be obtained first (for example, obtained from a database of an electronic map), and then whether the installation location of the video monitoring device is within the building range is determined according to this location information; and if so, the video monitoring device is filtered out, and if not, the video monitoring device is retained.

In another embodiment, the installation location information may directly include information indicating whether the video monitoring device is within the building range, and in this case, the video monitoring device arranged within the building range may be directly filtered out according to the installation location information without referring to location information of the building range.

Step S203 is optional. In some examples, the video monitoring devices selected in step S202 may not include video monitoring devices within the building range. In some examples, video monitoring devices within the building range may provide monitoring for external environment, and thus are not filtered out.

Step S204, selecting the target video monitoring devices each with the monitoring range overlapping with the perimeter from remaining video monitoring devices after filtering according to the location information of the perimeter.

When step S203 is included, the remaining video monitoring devices after filtering in this step may be used as newly selected video monitoring devices from which the target video monitoring device is selected, and when step S203 is not included, the target video monitoring device may be selected from the video monitoring devices selected in step S202.

In an implementation, when the acquired deployment data includes the installation location information and device attribute information of the video monitoring devices, the location information of the monitoring range of the video monitoring device may be calculated first according to the installation location information and the device attribute information. The installation location information may include coordinate values of installation locations of the video monitoring devices in the longitude and latitude coordinate system. The device attribute information may include a visible radius of the video monitoring device, or may further include attribute information such as an installation height, an orientation, a pitch angle, and a horizontal deflection angle of the video monitoring device to more accurately calculate the monitoring range of the video monitoring device.

In a specific implementation, there are many ways to calculate the location information of the monitoring range according to the installation location information and the device attribute information, and there are ones with low accuracy and others with high accuracy, and which way can be selected according to requirements of specific application scenarios.

For example, in an implementation, a circular region may be made by taking the installation location in the installation location information as a circle center, and taking the visible radius in the device attribute information as a radius, and this the circular region is taken as the monitoring range of the video monitoring device, and the location information of the monitoring range may be calculated according to the coordinate value of the installation location and the visible radius.

For another example, in an embodiment, considering that the video monitoring device has a certain orientation when being installed, and different installed orientations result in different monitoring ranges, after a circular region is made by taking the installation location in the installation location information as a circle center and taking the visible radius in the device attribute information as a radius, a sector region is determined from the circular region by taking the orientation in the device attribute information as a center line and taking the horizontal deflection angle in the device attribute information as a central angle, and the sector region is used as the monitoring range of the video monitoring device, and the location information of the monitoring range can be calculated according to the coordinate value, the visible radius, the orientation and the horizontal deflection angle of the installation location.

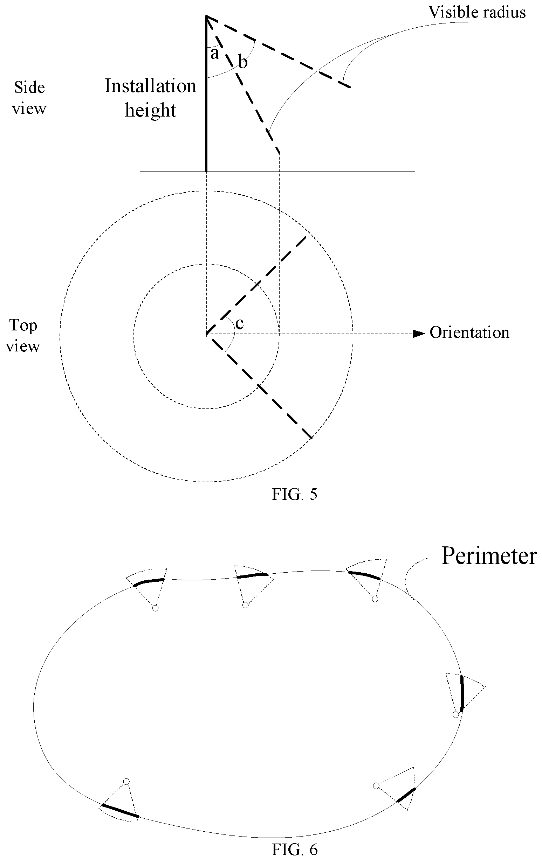

For another example, in an implementation, considering that an installation height and a pitch angle of the video monitoring device may also affect the monitoring range, an installation height line perpendicular to a horizontal plane may be made according to the installation height, the pitch angle is an angle range, and a visible radius having an angle with the installation height line being an upper limit of the pitch angle is projected onto the horizontal plane to obtain a horizontal maximum visible radius, a visible radius having an angle with the installation height line being a lower limit of the pitch angle is projected onto the horizontal plane to obtain a horizontal minimum visible radius, circular regions are made by taking the installation location as a circle center, and taking the horizontal minimum visible radius and the horizontal maximum visible radius as the radius respectively, in a circular ring region formed by the two circular regions, a sector ring region with the orientation as a center line and the horizontal deflection angle as a central angle is determined, the sector ring region is taken as the monitoring range of the video monitoring device, and the location information of the monitoring range can be calculated according to the coordinate value, the visible radius, the orientation, the horizontal deflection angle, the installation height and the pitch angle of the installation location. As shown in FIG. 5, a monitoring range determined according to installation location information and device attribute information of a video monitoring device is schematically drawn, that is, a sector ring region surrounded by two thick dashed lines and circular rings in a top view below in the figure; in the figure, *a* is the lower limit of the pitch angle, *b* is the upper limit of the pitch angle, and *c* is the horizontal deflection angle.

After the location information of the monitoring range of the video monitoring device is determined according to any one of the above implementations, whether the monitoring range of the video monitoring device overlaps the perimeter may be determined based on the location information of the perimeter and the location information of the monitoring range of the video monitoring device. When a monitoring range of a video monitoring device overlaps with the perimeter, the video monitoring device is determined as the target video monitoring device; and a monitoring range of a video monitoring device does not overlap with the perimeter, the video monitoring device will not be subsequently processed.

Further, based on the above embodiments, another embodiment of the video monitoring data processing method of the present disclosure is provided, and in this embodiment, step S40 includes steps S401 to S403.

Step 401, calculating a sum of areas or a sum of lengths of the overlapping regions.

The sum of areas of the overlapping regions or the sum of lengths of the overlapping regions may be calculated according to the location information of the overlapping regions. It may be understood that when the perimeter is the boundary line of the actual geographic region, the sum of lengths of the overlapping regions is calculated; and when the perimeter is the boundary region of the actual geographic region, the sum of areas of the overlapping regions is calculated.

A manner of calculating the sum of areas of the overlapping regions and a manner of calculating the sum of lengths of the overlapping regions are not limited in this embodiment. For example, in an implementation, when the perimeter is the boundary line of the actual geographic region, the overlapping regions are actually line segments, and when the location information of the overlapping regions is represented by using a set of coordinate points or a set of vectors, the set of coordinate points or the set of vectors are fitted into one or more line segments, and a length of each line segment is calculated, to obtain a length of the overlapping regions. For another example, in an implementation, when the perimeter is the boundary region of the actual geographic region, each overlapping region is actually an irregular graphical region. For each overlapping region, when the location information of the overlapping region is represented by a set of coordinate points or a set of vectors on the boundary line of the overlapping region, the set of coordinate points or the set of vectors may be fitted into the boundary line, and then an irregular region enclosed by the boundary line is converted into a combination of basic regular regions (for example, rectangle or triangle), and a region of each basic regular region is calculated according to a region calculation formula of the basic regular region, and then summed to obtain the region of the overlapping regions. When there are multiple overlapping regions, the regions of the overlapping regions are summed.

Step S402, calculating a total area or a total length of the perimeter.

It can be understood that when the perimeter is a boundary line of the actual geographic region, the total length of the perimeter is calculated, and when the perimeter is a boundary region of the actual geographic region, the total area of the perimeter is calculated. A manner of calculating the total area or the total length of the perimeter, refer to the above manner for calculating the sum of areas or the sum of lengths of the overlapping regions, and details will not be repeated herein.

Step S403, calculating an enclosure degree according to the sum of areas and the total area or according to the sum of lengths and the total length, and determining the enclosure degree as the enclosure result of the perimeter.

A manner of calculating the enclosure degree may include but is not limited to: dividing the sum of areas by the total area to obtain the enclosure degree, or dividing the sum of lengths by the total length to obtain the enclosure degree.

In an implementation, the video monitoring data processing method further includes:

Step S50, displaying, on an electronic map with a first display effect, a region of the perimeter not covered by the monitoring ranges of the target video monitoring devices; and/or

Step S60, displaying the overlapping regions of the perimeter on the electronic map with a second display effect, and displaying the monitoring ranges of the target video monitoring devices with a third display effect.

The first display effect, the second display effect, and the third display effect are different display effects, to enable the user to intuitively view which part of the perimeter are covered by the monitoring ranges, and which part of the perimeter are not covered by the monitoring ranges, and a degree of coverage on the perimeter by the monitoring range of each video monitoring device. The first display effect, the second display effect, and the third display effect may be set as required, which is not limited herein. For example, as shown in FIG. 6, when the perimeter is the boundary line of the actual geographic region, line segments of the perimeter covered by the monitoring ranges on the electronic map may be displayed by thick solid lines, and line segments not covered by the monitoring ranges may be displayed by thin solid lines, and the monitoring ranges of the target video monitoring devices are displayed in dashed lines, so that the user can more intuitively learn of an enclosure effect of the video monitoring devices on the perimeter.

In addition, the embodiments of the present disclosure provide a video monitoring data processing apparatus, including:
a first determining module, configured to determine location information of a perimeter of a security region, where the perimeter includes a boundary line or a boundary region of an actual geographic region corresponding to the security region;
a second determining module, configured to determine target video monitoring devices each with a monitoring range overlapping with the perimeter;
a third determining module, configured to determine overlapping regions between the perimeter and monitoring ranges of the target video monitoring devices according to the location information of the perimeter and location information of the monitoring ranges of the target video monitoring devices; and
a fourth determining module, configured to determine an enclosure result of the perimeter according to the overlapping regions and the location information of the perimeter, where the enclosure result represents a degree of coverage on the perimeter by monitoring ranges of video monitoring devices.

Optionally, the first determining module includes:
a first acquiring unit, configured to acquire region location information of the security region planned on an electronic map;
a second acquiring unit, configured to acquire road network data, and determining, according to the road network data and the region location information, a target road network region overlapping with the security region from road network regions corresponding to road facilities;
a modifying unit, configured to modify the security region according to the target road network region to obtain a modified actual geographic region corresponding to the modified security region, where modifying includes at least one of: removing the target road network region from the security region, merging the security region with the target road network region, or shrinking the security region into the target road network region; and
a first determining unit, configured to determine the location information of the perimeter according to location information of the modified actual geographic region;
and/or, the first determining module includes:
a widening unit, configured to widen the boundary line to a boundary ring with a preset width according to location information of the boundary line of the actual geographic region corresponding to the security region, and acquire location information of the boundary ring; and
a second determining unit, configured to determine the location information of the boundary ring as the location information of the perimeter;
and/or, the second determining module includes:
a third acquiring unit, configured to acquire deployment data of a plurality of video monitoring devices;
a selecting unit, configured to select video monitoring devices each having a shortest distance to the perimeter being less than a preset threshold from the plurality of video monitoring devices according to installation location information in the deployment data;
a filtering unit, configured to filter out video monitoring devices deployed in a building range from the selected video monitoring devices according to the installation location information in the deployment data; and
an electing unit, configured to select the target video monitoring devices each with the monitoring range overlapping with the perimeter from remaining video monitoring devices after filtering according to the location information of the perimeter;
and/or, the fourth determining module includes:
a first calculating unit, configured to calculate a sum of areas or a sum of lengths of the overlapping regions;
a second calculating unit, configured to calculate a total area or a total length of the perimeter;
a third calculating unit, configured to calculate an enclosure degree according to the sum of areas and the total area or according to the sum of lengths and the total length, and determine the enclosure degree as the enclosure result of the perimeter.
And/or, the apparatus further includes:
a first displaying module, configured to display, on an electronic map with a first display effect, a region of the perimeter not covered by the monitoring ranges of the target video monitoring devices; and
a second displaying module, configured to display the overlapping regions of the perimeter on the electronic map with a second display effect, and display the monitoring ranges of the target video monitoring devices with a third display effect.

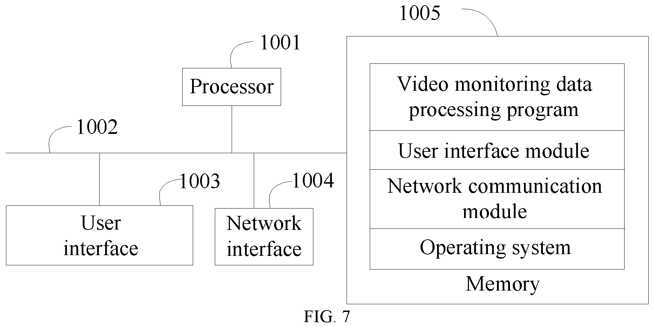

In addition, an embodiment of the present disclosure further provides a video monitoring data processing device, as shown in FIG. 7, and FIG. 7 is a schematic structural diagram of a device in a hardware running environment according to an embodiment of the present disclosure. It should be noted that the video monitoring data processing device in this embodiment of the present disclosure may be a device such as a smart phone, a personal computer, or a server, which is not specifically limited herein.

As shown in FIG. 7, the video monitoring data processing device may include: a processor 1001, for example, a CPU (central processing unit), a network interface 1004, a user interface 1003, a memory 1005, and a communication bus 1002. The communication bus 1002 is configured to implement connection and communication between these components. The user interface 1003 may include a display screen, an input unit such as a keyboard, and optionally, the user interface 1003 may further include a standard wired interface and a standard wireless interface. Optionally, the network interface 1004 may include a standard wired interface or a standard wireless interface (for example, a WI-FI interface). The memory 1005 may be a highspeed RAM (random access memory), or may be a non-volatile memory, for example, a magnetic disk memory. The memory 1005 may alternatively be a storage apparatus independent of the processor 1001.

A person skilled in the art may understand that the structure of the device shown in FIG. 7 does not constitute a limitation on the video monitoring data processing device, and may include more or fewer components than those shown in the figure, or some components may be combined, or different component arrangements may be used.

As shown in FIG. 7, the memory 1005 as a computer storage medium may include an operating system, a network communication module, a user interface module, and a video monitoring data processing program. The operating system is a program that manages and controls device hardware and software resources, and supports running of the video monitoring data processing program and other software or programs. In the device shown in FIG. 7, the user interface 1003 is mainly configured to perform data communication with a client; the network interface 1004 is mainly configured to establish a communication connection with a server; and the processor 1001 may be configured to invoke the video monitoring data processing program stored in the memory 1005, and perform the following operations:
determining location information of a perimeter of a security region, where the perimeter includes a boundary line or a boundary region of an actual geographic region corresponding to the security region;
determining target video monitoring devices each with a monitoring range overlapping with the perimeter;
determining overlapping regions between the perimeter and monitoring ranges of the target video monitoring devices according to the location information of the perimeter and location information of the monitoring ranges of the target video monitoring devices; and
determining an enclosure result of the perimeter according to the overlapping regions and the location information of the perimeter, where the enclosure result represents a degree of coverage on the perimeter by monitoring ranges of video monitoring devices.

Further, determining the location information of the perimeter of the security region includes:
acquiring region location information of the security region planned on an electronic map;
acquiring road network data, and determining, according to the road network data and the region location information, a target road network region overlapping with the security region from road network regions corresponding to road facilities;
modifying the security region according to the target road network region to obtain a modified actual geographic region corresponding to the modified security region, where modifying includes at least one of: removing the target road network region from the security region, merging the security region with the target road network region, or shrinking the security region into the target road network region; and
determining the location information of the perimeter according to location information of the modified actual geographic region.

Further, determining the location information of the perimeter of the security region includes:
widening the boundary line to a boundary ring with a preset width according to location information of the boundary line of the actual geographic region corresponding to the security region, and acquiring location information of the boundary ring; and
determining the location information of the boundary ring as the location information of the perimeter.

Further, determining the target video monitoring devices each with the monitoring range overlapping with the perimeter includes:
acquiring deployment data of a plurality of video monitoring devices;
selecting video monitoring devices each having a shortest distance to the perimeter being less than a preset threshold from the plurality of video monitoring devices according to installation location information in the deployment data;
filtering out video monitoring devices deployed in a building range from the selected video monitoring devices according to the installation location information in the deployment data; and
selecting the target video monitoring devices each with the monitoring range overlapping with the perimeter from remaining video monitoring devices after filtering according to the location information of the perimeter.

Further, determining the enclosure result of the perimeter according to the overlapping regions and the location information of the perimeter includes:
calculating a sum of areas or a sum of lengths of the overlapping regions;
calculating a total area or a total length of the perimeter;
calculating an enclosure degree according to the sum of areas and the total area or according to the sum of lengths and the total length, and determining the enclosure degree as the enclosure result of the perimeter.

Further, the processor 1001 may be further configured to invoke the video monitoring data processing program stored in the memory 1005 to perform following operations:
displaying, on an electronic map with a first display effect, a region of the perimeter not covered by the monitoring ranges of the target video monitoring devices; and
displaying the overlapping regions of the perimeter on the electronic map with a second display effect, and displaying the monitoring ranges of the target video monitoring devices with a third display effect.

In addition, an embodiment of the present disclosure further provides a computer-readable storage medium, storing a video monitoring data processing program, where when the video monitoring data processing program is executed by a processor, steps of the above video monitoring data processing method is implemented.

The embodiments of the video monitoring data processing device and the computer-readable storage medium of the present disclosure may refer to the embodiments of the video monitoring data processing method of the present disclosure, and details will not be repeated herein.

It should be noted that, in this specification, the terms "include", "comprise", or any other variation thereof are intended to cover a non-exclusive inclusion, so that a process, method, article, or device including a series of elements includes not only those elements, but also other elements not explicitly listed, or elements inherent to such a process, method, article, or device. Without more limitations, an element defined by the statement "including a" does not preclude the presence of another identical element in a process, method, article, or apparatus that includes the element.

Sequence numbers in the above embodiments of the present disclosure are merely for description, and do not represent primary or secondary of the embodiments.

Through the description of the above embodiments, those skilled in the art can clearly understand that the method of the above embodiments can be implemented by means of software plus a necessary universal hardware platform, and certainly can also be implemented by hardware, but the former is a better embodiment in many cases. Based on such understanding, the technical solution of the present disclosure essentially or the part contributing to the related arts may be embodied in the form of a software product, and the computer software product is stored in a storage medium (such as ROM/RAM, magnetic disk, and optical disk), and includes a plurality of instructions for enabling a terminal device (which may be a mobile phone, a computer, a server, an air conditioner, or a network device) to execute the method described in each embodiment of the present disclosure.

The above are only preferred embodiments of the present disclosure, and is not intended to limit the patent scope of the present disclosure, and any equivalent structure or equivalent flow transformation made by using the specification and accompanying drawings of the present disclosure, or those directly or indirectly applied to other related technical fields, are all included in the patent protection scope of the present disclosure.

## Claims

1. A video monitoring data processing method, comprising:
determining location information of a perimeter of a security region, wherein the perimeter comprises a boundary line or a boundary region of an actual geographic region corresponding to the security region;
determining target video monitoring devices each with a monitoring range overlapping with the perimeter;
determining overlapping regions between the perimeter and monitoring ranges of the target video monitoring devices according to the location information of the perimeter and location information of the monitoring ranges of the target video monitoring devices; and
determining an enclosure result of the perimeter according to the overlapping regions and the location information of the perimeter, wherein the enclosure result represents a degree of coverage on the perimeter by monitoring ranges of video monitoring devices.

2. The video monitoring data processing method according to claim 1, wherein determining the location information of the perimeter of the security region comprises:
acquiring region location information of the security region planned on an electronic map;
acquiring road network data, and determining, according to the road network data and the region location information, a target road network region overlapping with the security region from road network regions corresponding to road facilities;
modifying the security region according to the target road network region to obtain a modified actual geographic region corresponding to the modified security region, wherein modifying comprises at least one of: removing the target road network region from the security region, merging the security region with the target road network region, or shrinking the security region into the target road network region; and
determining the location information of the perimeter according to location information of the modified actual geographic region.

3. The video monitoring data processing method according to claim 1, wherein determining the location information of the perimeter of the security region comprises:
widening the boundary line to a boundary ring with a preset width according to location information of the boundary line of the actual geographic region corresponding to the security region, and acquiring location information of the boundary ring; and
determining the location information of the boundary ring as the location information of the perimeter.

4. The video monitoring data processing method according to claim 1, wherein determining the target video monitoring devices each with the monitoring range overlapping with the perimeter comprises:
acquiring deployment data of a plurality of video monitoring devices;
selecting video monitoring devices each having a shortest distance to the perimeter being less than a preset threshold from the plurality of video monitoring devices according to installation location information in the deployment data;
filtering out video monitoring devices deployed in a building range from the selected video monitoring devices according to the installation location information in the deployment data; and
selecting the target video monitoring devices each with the monitoring range overlapping with the perimeter from remaining video monitoring devices after filtering according to the location information of the perimeter.

5. The video monitoring data processing method according to any one of claims 1-4, wherein determining the enclosure result of the perimeter according to the overlapping regions and the location information of the perimeter comprises:
calculating a sum of areas of the overlapping regions;
calculating a total area of the perimeter; and
calculating an enclosure degree according to the sum of areas and the total area, and determining the enclosure degree as the enclosure result of the perimeter.

6. The video monitoring data processing method according to any one of claims 1-4, wherein determining the enclosure result of the perimeter according to the overlapping regions and the location information of the perimeter comprises:
calculating a sum of lengths of the overlapping regions;
calculating a total length of the perimeter; and
calculating an enclosure degree according to the sum of lengths and the total length, and determining the enclosure degree as the enclosure result of the perimeter.

7. The video monitoring data processing method according to any one of claims 1-6, further comprising:
displaying, on an electronic map with a first display effect, a region of the perimeter not covered by the monitoring ranges of the target video monitoring devices; and
displaying the overlapping regions of the perimeter on the electronic map with a second display effect, and displaying the monitoring ranges of the target video monitoring devices with a third display effect.

8. A video monitoring data processing apparatus, comprising:
a first determining module, configured to determine location information of a perimeter of a security region, wherein the perimeter comprises a boundary line or a boundary region of an actual geographic region corresponding to the security region;
a second determining module, configured to determine target video monitoring devices each with a monitoring range overlapping with the perimeter;
a third determining module, configured to determine overlapping regions between the perimeter and monitoring ranges of the target video monitoring devices according to the location information of the perimeter and location information of the monitoring ranges of the target video monitoring devices; and
a fourth determining module, configured to determine an enclosure result of the perimeter according to the overlapping regions and the location information of the perimeter, wherein the enclosure result represents a degree of coverage on the perimeter by monitoring ranges of video monitoring devices.

9. The video monitoring data processing apparatus according to claim 8, wherein the first determining module comprises:
a first acquiring unit, configured to acquire region location information of the security region planned on an electronic map;
a second acquiring unit, configured to acquire road network data, and determining, according to the road network data and the region location information, a target road network region overlapping with the security region from road network regions corresponding to road facilities;
a modifying unit, configured to modify the security region according to the target road network region to obtain a modified actual geographic region corresponding to the modified security region, wherein modifying comprises at least one of: removing the target road network region from the security region, merging the security region with the target road network region, or shrinking the security region into the target road network region; and
a first determining unit, configured to determine the location information of the perimeter according to location information of the modified actual geographic region.

10. The video monitoring data processing apparatus according to claim 8, wherein the first determining module comprises:
a widening unit, configured to widen the boundary line to a boundary ring with a preset width according to location information of the boundary line of the actual geographic region corresponding to the security region, and acquire location information of the boundary ring; and
a second determining unit, configured to determine the location information of the boundary ring as the location information of the perimeter.

11. The video monitoring data processing apparatus according to claim 8, wherein the second determining module comprises:
a third acquiring unit, configured to acquire deployment data of a plurality of video monitoring devices;
a selecting unit, configured to select video monitoring devices each having a shortest distance to the perimeter being less than a preset threshold from the plurality of video monitoring devices according to installation location information in the deployment data;
a filtering unit, configured to filter out video monitoring devices deployed in a building range from the selected video monitoring devices according to the installation location information in the deployment data; and
an electing unit, configured to select the target video monitoring devices each with the monitoring range overlapping with the perimeter from remaining video monitoring devices after filtering according to the location information of the perimeter.

12. The video monitoring data processing apparatus according to any one of claims 8-11, wherein the fourth determining module comprises:
a first calculating unit, configured to calculate a sum of areas or a sum of lengths of the overlapping regions;
a second calculating unit, configured to calculate a total area or a total length of the perimeter;
a third calculating unit, configured to calculate an enclosure degree according to the sum of areas and the total area or according to the sum of lengths and the total length, and determine the enclosure degree as the enclosure result of the perimeter.

13. The video monitoring data processing apparatus according to any one of claims 8-12, further comprising:
a first displaying module, configured to display, on an electronic map with a first display effect, a region of the perimeter not covered by the monitoring ranges of the target video monitoring devices; and
a second displaying module, configured to display the overlapping regions of the perimeter on the electronic map with a second display effect, and display the monitoring ranges of the target video monitoring devices with a third display effect.

14. A video monitoring data processing device, comprising: a memory, a processor, and a video monitoring data processing program stored in the memory and executable on the processor, wherein when the video monitoring data processing program is executed by the processor, steps of the video monitoring data processing method according to any one of claims 1-7 are implemented.

15. A computer-readable storage medium, storing a video monitoring data processing program, wherein when the video monitoring data processing program is executed by a processor, steps of the video monitoring data processing method according to any one of claims 1-7 is implemented.
